# EUROPÄISCHE PATENTSCHRIFT

(11) **EP 1 643 265 B1**
(45) Veröffentlichungstag und Bekanntmachung des Hinweises auf die Patenterteilung: **05.01.2011**
(21) Anmeldenummer: 05106606.6
(22) Anmeldetag: 19.07.2005
(51) Int. Cl.: G01S 7/40, G01S 13/93

(54) **Radarsystem für Kraftfahrzeuge**
Radar system for automobiles
Système radar pour véhicules

(30) Priorität: 29.09.2004 DE 102004047176
(43) Veröffentlichungstag der Anmeldung: 05.04.2006
(73) Patentinhaber: ROBERT BOSCH GMBH, 70442 Stuttgart (DE)
(72) Erfinder: Mayer, Hermann, 71665 Vaihingen (DE); Lucas, Bernhard, 74354 Besigheim (DE); Hilsebecher, Joerg, 70839 Gerlingen (DE); Hauk, Joachim, 71272 Renningen-Malmsheim (DE); Meister, Dirk, 71696 Moeglingen (DE); Wilhelm, Ulf, 71277 Rutesheim (DE); Haffmans, Paco, 71032 Boeblingen (DE)

(56) Entgegenhaltungen:
- DE-A1- 4 216 406
- DE-A1- 19 922 411
- GANGULI A ET AL: "Target tracking and radar health monitoring for highway vehicle applications" PROCEEDINGS OF THE 2002 AMERICAN CONTROL CONFERENCE. ACC. ANCHORAGE, AL, MAY 8 - 10, 2002, AMERICAN CONTROL CONFERENCE, NEW YORK, NY : IEEE, US, Bd. VOL. 1 OF 6, 8. Mai 2002 (2002-05-08), Seiten 3696-3701, XP010596952 ISBN: 0-7803-7298-0

## Beschreibung

### Stand der Technik

Die Erfindung betrifft ein Radarsystem für Kraftfahrzeuge, mit einer Antenne, einem ersten Prozessor, der dazu ausgebildet ist von der Antenne über einen primären Signalpfad zugeführte Signale in ein Spektrum zu transformieren, und einem zweiten Prozessor zur weiteren Auswertung des Spektrums.

Solche Radarsysteme werden in Kraftfahrzeugen beispielsweise zur adaptiven Geschwindigkeitsregelung (Adaptive Cruise Control) eingesetzt und haben die Funktion, andere Fahrzeuge zu orten, so daß der Abstand des eigenen Fahrzeugs zu einem vorausfahrenden Fahrzeugs automatisch geregelt werden kann.

Ein gebräuchliches Radarsystem für diese Zwecke ist ein FMCW-Radar (Frequency Modulated Continous Wave). Bei diesem System handelt es sich um ein Dauerstrichradar, bei dem die Frequenz des von der Antenne gesendeten Radarsignals rampenförmig moduliert wird. Das von der Antenne zu einem bestimmten Zeitpunkt empfangene Radarecho wird mit dem zum selben Zeitpunkt gesendeten Radarsignal gemischt, so daß man durch Schwebung eine niederfreqentes Mischersignal erhält, dessen Frequenz der Frequenzdifferenz zwischen dem gesendeten und dem empfangenen Signal entspricht. Diese Frequenzdifferenz ist einerseits von der Signallaufzeit und damit vom Abstand des Radarziels und andererseits, aufgrund des Dopplereffekts, von der Relativgeschwindigkeit des Radarziels abhängig.

Das Mischersignal wird digitalisiert und in jedem Meßzyklus über einer Zeitspanne, die etwa der Dauer der Frequenzrampe entspricht, gesampeld und beispielsweise durch schnelle Fouriertransformation (FFT) in ein Spektrum transformiert. In diesem Spektrum ist dann jedes geortete Radarziel durch einen Peak bei einer bestimmten Frequenz repräsentiert. Die Mehrdeutigkeit zwischen dem abstandsabhängigen und den relativgeschwindigkeitsabhängigen Frequenzanteil wird dadurch beseitigt, daß das gesendete Radarsignal in jedem Meßzyklus mit unterschiedlichen Rampensteigungen moduliert wird, beispielsweise einmal mit steigender Rampe und einmal mit fallender Rampe mit dem Betrage nach gleicher Steigung. Bildet man dann die Summe der für die steigende und die fallende Rampe erhaltenen Frequenzen des Mischersignals, so löschen sich die laufzeitabhängigen Anteile gegenseitig aus, so daß man ein Maß für die Dopplerverschiebung und damit die Relativgeschwindigkeit erhält. Wenn man die beiden Frequenzen von einander subtrahiert, löschen sich die geschwindigkeitsabhängigen Anteile aus, und man erhält ein Maß für den Abstand.

Damit man die georteten Fahrzeuge korrekt den verschiedenen Fahrspuren der Fahrbahn zuordnen kann, wird mit einem winkelauflösenden Radarsystem gearbeitet. Beispielsweise weist die Antenne mehrere in der Brennebene einer gemeinsamen Mikrowellenlinse angeordnete Antennenpatches auf, so daß mehrere leicht winkelversetzte Radarkeulen erzeugt werden. Die oben beschriebene Auswertung wird dann für jeden Kanal, d. h. für jedes Patch gesondert durchgeführt, und durch Vergleich der Amplituden und/oder Phasen der für dasselbe Radarziel in den verschiedenen Kanälen erhaltenen Signale läßt sich der Azimutwinkel des Radarziels zumindest nährungsweise bestimmen.

Bei einer bisher gebräuchlichen Architektur der Auswerteelektronik wird mit nur einem einzigen Signalpfad gearbeitet, in dem die Mischersignale der verschiedenen Kanäle digitalisiert und dem ersten Prozessor, beispielsweise einen digitalen Signalprozessor (DSP) zugeführt werden, dessen Hauptaufgabe darin besteht, für jeden Kanal das entsprechende Spektrum zu berechnen. Die weitere Auswertung erfolgt dann mit einem gesonderten zweiten Prozessor, beispielsweise einem Mikrocontroller (µC). Dieser Mikrocontroller erfüllt vielfältige Aufgaben, unter anderem die Beseitigung der oben erwähnten Mehrdeutigkeit, die Bestimmung der Azimutwinkel der Radarziele, die Verfolgung der verschiedenen Radarziele über mehrere Meßzyklen hinweg (Tracking), die Auswahl eines Zielobjekts für die Abstandsregelung und schließlich die eigentliche Abstandsregelung durch Eingriff in das Antriebssystem und/oder Bremssystem des Fahrzeugs.

Damit das Verkehrsgeschehen hinreichend zuverlässig bewertet werden kann, müssen die Radarmessungen mit kurzer Zykluszeit wiederholt werden, beispielsweise in Abständen von wenigen Millisekunden. Hieraus folgt, daß die digitale Signalverarbeitung in den Prozessoren mit hoher Geschwindigkeit und mit entsprechend hohem Datendurchsatz erfolgen muß, so daß das Auftreten von Fehlern im Signalpfad nicht immer zu vermeiden ist. Solche Fehler können beispielsweise durch eingestreute Rauschsignale, Bit-Alliasing und dergleichen verursacht werden.

Bisher werden ACC-Systeme generell bei Fahrten mit relativ hoher Fahrgeschwindigkeit auf Autobahnen oder Schnellstraßen eingesetzt, also in Situationen, in denen die Fahrzeugabstände relativ groß sind, die Dynamik des Verkehrsgeschehens verhältnismäßig gering ist und insbesondere nicht mit stehenden Hindernissen auf der Fahrbahn gerechnet zu werden braucht. Es gibt jedoch Bestrebungen, die Funktionalität von radargestützten Fahrerassistenzsystemen zu erweitern und insbesondere auch in den unteren Geschwindigkeitsbereich auszudehnen. Ein Beispiel für eine solche Funktionserweiterung ist etwa eine Stop-and-Go-Funktion, die es beispielsweise ermöglicht, beim Auffahren auf ein Stauende das eigene Fahrzeug automatisch in den Stand zu bremsen, und die gegebenenfalls auch ein automatisches Wiederanfahren ermöglicht, wenn sich der Stau wieder auflöst. Weitere Beispiele für Funktionserweiterungen sind sogenannte Pre-Crash-Funktionen, wie etwa die automatische Einleitung einer Notbremsung bei erkannter Kollisionsgefahr, die vorbereitende Aktivierung von passiven Sicherheitssystemen wie Airbags und Gurtstraffern und dergleichen. Für diese Funktionen gelten naturgemäß hohe Sicherheitsstandards, so daß auch sporadische Fehlfunktionen des Radarsystems nicht mehr im gleichen Maße wie bisher toleriert werden können.

### Vorteile der Erfindung

Die Erfindung mit den in Anspruch 1 angegebenen Merkmalen bietet den Vorteil, daß die Verläßlichkeit des Radarsystems gesteigert wird.

Erfindungsgemäß ist eine zweiter, redundanter Signalpfand vorgesehen, über den die empfangenen Signale, genauer, die Mischersignale, unter Umgehung des ersten Prozessors direkt dem zweiten Prozessor, also beispielsweise dem Mikrocontroller zugeführt werden. Der Mikrocontroller erhält nun die zusätzliche Funktion, die auf dem zweiten Signalpfad zugeführten Signale eigenständig in die entsprechenden Spektren zu transformieren. Auf diese Weise wird die Redundanz des Systems erhöht, und man erhält unabhängig voneinander gewonnene Spektren, die sich auf Übereinstimmung bzw. Konsistenz prüfen lassen, so daß etwaige Fehler schnell und sicher erkannt werden können und erforderlichenfalls geeignete Gegenmaßnahmen getroffen werden können.

So kann z. B. bei einer Diskrepanz zwischen den einander entsprechenden Spektren das Ergebnis für den aktuellen Meßzyklus verworfen werden um zu vermeiden, daß eine unerwünschte Fehlreaktion des Systems ausgelöst wird. Wenn solche Diskrepanzen gehäuft oder permanent auftreten, deutet dies auf einen Systemfehler oder Hardwarefehler hin, und die geeignete Gegenmaßnahme bestünde dann in einem Neustart und/oder einer Abschaltung des Systems, verbunden mit einem Warnhinweis an den Fahrer. Wenn sich der Fehler auch durch einen Neustart nicht beheben läßt, kann der Fahrer durch eine Anzeige auf einem Display aufgefordert werden, eine Werkstatt aufzusuchen.

Ein besonderer Vorteil der Erfindung besteht darin, daß die größere Redundanz dadurch erreicht werden kann, daß weitgehend auf ohnehin vorhandene Systemkomponenten zurückgegriffen wird, so daß nur geringfügige Modifikationen an dem vorhandenen System erforderlich sind und praktisch keine zusätzlichen Rechenkapazität bereitgestellt werden muß. Unter anderem wird dabei der Umstand ausgenutzt, daß die Auslastung des Mikrocontrollers zeitlichen Schwankungen unterliegt, da sie beispielsweise von der Verkehrsdichte abhängig ist. Da der Mikrocontroller für eine mögliche Spitzenbelastung ausgelegt ist, besitzt er im allgemeinen genügend Kapazitätsreserven, um die zusätzlichen Aufgaben zu übernehmen, die ihm durch die Erfindung übertragen werden. In Anbetracht der Vielfalt der Aufgaben des Mikrocontrollers besteht außerdem die Möglichkeit, diese Aufgaben nach Prioritäten zu gewichten und erforderlichenfalls weniger wichtige Aufgaben zugunsten von Aufgaben mit höherer Priorität zurückzustellen.

Vorteilhafte Ausgestaltungen der Erfindung ergeben sich aus den Unteransprüchen.

Bevorzugt enthält der zweite Signalpfad einen eigenen Analog/Digital-Wandler. Beispielsweise kann dazu ein Wandler benutzt werden, der in dem als Mikrocontroller benutzen Standardbauelement ohnehin vorhanden ist. Die beiden Signalpfade schließen somit die Analog/Digital-Umwandlung ein, so daß durch gegenseitige Kontrolle auch Fehler bei der Digitalisierung der Daten erkannt werden können.

Die Erfindung erlaubt wahlweise, je nach Ausführungsform oder gegebenenfalls auch situationsabhängig, eine vollständige Selbstkontrolle durch permanenten Abgleich der Spektren in sämtlichen Kanälen oder eine eingeschränkte, stichprobenartige Kontrolle. Beispielsweise ist es möglich, den redundanten Signalpfad nur für einen der mehreren Kanäle zu nutzen, also nur für das Signal eines der mehreren Mischer. Da die Digitalisierung der Daten und die schnelle Fouriertransformation im primären Signalpfad für sämtliche Kanäle mit derselben Hardware und demselben Algorithmus erfolgt, lassen sich schwerwiegende Fehler oder eine signifikante erhöhte Fehlerhäufigkeit auch dann erkennen, wenn im redundanten Pfad nur das Spektrum für einen Kanal berechnet und mit dem entsprechenden Spektrum aus dem primären Pfad verglichen wird. Die Beanspruchung des Mikrocontrollers ist dabei erheblich reduziert. Eine noch größere Verläßlichkeit ohne zusätzliche Belastung des Mikrocontrollers läßt sich dadurch erreichen, daß der redundante Pfad in aufeinanderfolgenden Meßzyklen jeweils für einen anderen Kanal benutzt wird.

Der Algorithmus, der im Mikrocontroller, also im zweiten Prozessor, für die schnelle Fouriertransformation benutzt wird, kann speziell an die Architektur des Mikrocontrollers angepaßt sein und ist vorzugsweise nicht identisch mit dem Algorithmus, der im ersten Prozessor benutzt wird. Dies ermöglicht es, auch Softwarefehler aufzuspüren, die sich in der Praxis nur sporadisch, bei seltenen, besonders ungünstigen Konstellationen bemerkbar machen. Es ist auch möglich, daß Spektrum im redundanten Pfad mit einer geringeren Auflösung zu berechnen als im primären Pfad. Für die weitere Auswertung der Spektren wird man dann die hochaufgelösten Spektren aus dem primären Pfad verwenden, und die Auflösung im redundanten Pfad braucht nur so groß zu sein, daß sich etwaige Fehler mit hinreichender Empfindlichkeit erkennen lassen. Auch durch diese Maßnahme läßt sich im Bedarfsfall die Arbeitsbelastung des Mikrocontrollers in zulässingen Grenzen halten.

Andererseits hat auch eine Ausführungsform, bei der der Mikrocontroller so ausgelegt ist, daß er die Funktion des ersten Prozessors vollständig übernehmen kann, ihre speziellen Vorteile. In diesem Fall besteht neben der Möglichkeit, im Normalbetrieb eine vollständige und permanente Selbstkontrolle durchzuführen, auch die Möglichkeit, in Notsituationen, etwa bei erkannter Kollisionsgefahr, auf die Redundanz zu verzichten und die frei werdende Rechenkapazität des Mikrocontrollers für eine Verkürzung der Zykluszeit zu nutzen, so daß das Verkehrsgeschehen in der kritischen Situation mit höherer zeitlicher Auflösung verfolgt werden kann. Eine weitere Verkürzung der Zykluszeit läßt sich dadurch erreichen, daß sich der Mikrocontroller und der erste Prozessor (DSP) die Arbeit teilen, indem die Spektren für einige Kanäle vom ersten Prozessor und für die übrigen Kanäle vom zweiten Prozessor berechnet werden.

Ausführungsbeispiele der Erfindung sind in den Zeichnungen dargestellt und in der nachfolgenden Beschreibung näher erläutert.

Es zeigen:
- Figur 1: ein Blockdiagramm eines erfindungsgemäßen Radarsystems; und
- Figuren 2 bis 5: detailliertere Blockdiagramme für Ausgestaltungen des Radarsystems gemäß unterschiedlichen Ausführungsbeispielen.

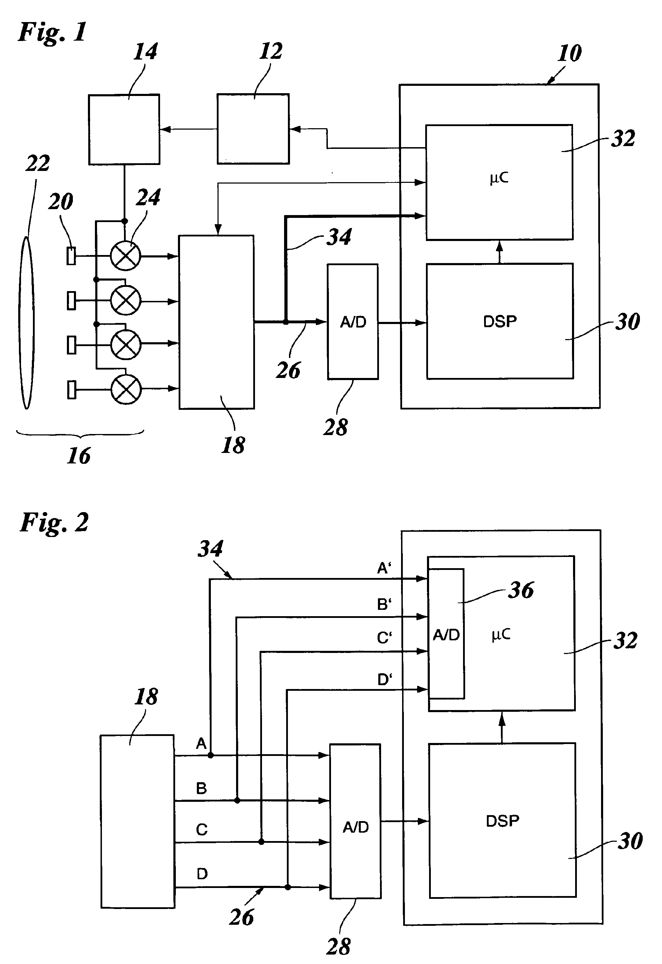

Das in Figur 1 gezeigte Radarsystem umfaßt eine elektronische Steuer- und Auswerteeinheit 10, einen Oszillatortreiber 12, einen Oszillator 14, eine Antenne 16 und einen Vorverstärker 18. Die Antenne 16 weist im gezeigten Beispiel vier Antennenpatches 20 auf, die nebeneinander in der Brennebene einer gemeinsamen Mikrowellenlinse 22 liegen und somit vier in der Breite aufgefächerte Radarstrahlen oder Keulen erzeugen. Das von einem einzelnen Antennenpatch 20 emittierte und an einem Radarziel reflektierte Radarsignal wird wieder von der Mikrowellenlinse 22 gebündelt und von demselben Patch empfangen (monostatische Bauweise). Jedem Antennenpatch 20 ist ein Mischer 24 zugeordnet. Die Mischer 24 sind in der Praxis zumeist auf einer gemeinsamen Platine mit den Antennenpatches 20 angeordnet und werden deshalb hier als Teil der Antenne 16 betrachtet.

Der Oszillatortreiber 12 wird durch die Steuer- und Auswerteeinheit 10 gesteuert und steuert seinerseits die Frequenz des Oszillators 14. Das vom Oszillator 14 erzeugte Radarsignal mit einer rampenförmig modulieren Frequenz wird über die Mischer 24 den Antennenpatches 20 zugeführt. Das von den Antennenpatches 20 empfangene Signal wird im jeweiligen Mischer 24 mit dem Signal des Oszillators 14 gemischt, und das dadurch erhaltene niederfrequente Mischersignal wird im Vorverstärker 18 verstärkt. Auch der Vorverstärker 18 wird durch die Steuer- und Auswerteeinheit 10 gesteuert.

Ein primärer Signalpfad 26 enthält einen Analog/Digital-Wandler 28, der das analoge Ausgangssignal des Vorverstärkers 18 für alle vier Kanäle digitalisiert und an einen ersten Prozessor 30, einen digitalen Signalprozessor (DSP) in der Steuer- und Auswerteeinheit 10 weiterleitet. Die digitalisierten Daten werden für eine bestimmte Zeitspanne, die annähernd der Dauer einer Fequenzmodulationsrampe des Oszillators 14 entspricht, in einem internen Speicher des ersten Prozessors 30 gesampeld und dann kanalweise einer schnellen Fouriertransformation (FFT) unterzogen, so daß man für jeden Kanal ein digitales Frequenzspektrum des betreffenden Mischersignals erhält. Diese Spektren werden dann an einen zweiten Prozessor 32, einen Mikrocontroller (µC), der Steuer- und Auswerteeinheit 10 übergeben und dort weiter ausgewertet.

Jeder Meßzyklus des Radarsystems umfaßt mehrere Frequenzmodulationsrampen, die sich in ihrer Rampensteigung unterscheiden. Innerhalb eines einzelnen Meßzyklus erhält man somit mehrere Sätze von je vier Spektren, aus denen der zweite Prozessor 32 die Abstände, Relativgeschwindigkeiten und Azimutwinkel der georteten Radarziele berechnet. Die so berechneten Daten werden dann mit den Daten aus vorangegangenen Meßzyklen verglichen, um die Bewegungen der Radarziele im Laufe der Zeit zu verfolgen. Auf dieser Grundlage wird dann beispielsweise im Rahmen eines ACC-Sytems ein Zielobjekt für die Abstandsregelung ausgewählt, und durch Eingriff in das Antriebssystem und/oder Bremssystem des Fahrzeugs wird der Abstand zum Zielobjekt geregelt. Auch diese Funktionen können ganz oder teilweise von dem zweiten Prozessor 32 ausgeführt werden, der zu diesem Zweck über nicht gezeigte interne Speicher und Schnittstellen zu anderen Systemkomponenten des Fahrzeugs verfügt.

Insoweit entsprechen der bisher beschriebene Aufbau und die Funktionsweise des Radarsystems dem Stand der Technik. Die Besonderheit des hier vorgeschlagenen Systems besteht darin, daß parallel zu dem primären Signalpfad 26 ein redundanter Signalpfad 34 vorgesehen ist, der den analogen Ausgang des Vorverstärkers 18 direkt mit dem zweiten Prozessor 32 verbindet. Wie Figur 2 zeigt, weist der zweite Prozessor 32 einen integrierten Analog/Digital-Wandler 36 auf. Der primäre Signalpfad 26 umfaßt vier Kanäle A, B, C und D, entsprechend den vier Mischern 24, und der redundante Signalpfad 34 umfaßt vier Kanäle A', B', C' und D', die jeweils von dem entsprechenden Kanal des primären Pfades abzweigen und zu dem Analog/DigitalWandler 36 des zweiten Prozessors 32 führen. Die analogen Ausgangssignale des Vorverstärkers 18 werden somit im integrierten Analog/Digital-Wandler 36 des zweiten Prozessors 32 noch einmal unabhängig digitalisiert. Der zweite Prozessor 32 ist so programmiert, daß er die über den redundanten Signalpfad 34 zugeführten und digitalisierten Daten mit Hilfe eines eigenen Algorithmus einer schnellen Fouriertransformation unterzieht, so daß zu jedem Spektrum, das der erste Prozessor 30 liefert, über den redundanten Pfad ein entsprechendes Referenzspektrum gebildet wird. Wenn in keinem der Signalpfade 26, 34 ein Fehler aufgetreten ist, müssen die so erhaltenen Referenzspektren mit den zuhörigen, vom ersten Prozessor 30 gelieferten Spektren im Wesentlichen (bis auf Rundungsfehler) übereinstimmen. Auf diese Weise läßt sich kontrollieren, ob die Signalpfade 26, 34 fehlerfrei arbeiten.

Die Analog/Digital-Wandler 28 und 36, die dem ersten bzw. zweiten Prozessor zugeordnet sind, müssen geeignet miteinander synchronisiert sein. Dies läßt sich beispielsweise durch den Austausch von Synchronisationssignalen zwischen dem ersten und dem zweiten Prozessor erreichen. Wahlweise kann ein solches Synchronisationssignal jedoch auch auf das vom Oszillator 14 erzeugte Radarsignal aufmoduliert werden, etwa in der Form einer Komponente mit einer charakteristischen Frequenz und/oder Amplitude, die sich dann aus dem empfangenen Signal wieder ausfiltern und zur Synchronisation verwenden läßt.

In dem oben beschriebenen Ausführungsbeispiel wird zu jedem Spektrum, das der erste Prozessor 30 berechnet, zu Kontrollzwecken ein entsprechendes Referenzspektrum berechnet. In modifizierten Ausführungsformen ist es auch möglich, den primären Signalpfad 26 lediglich stichprobenartig anhand einiger ausgewählter Spektren zu überprüfen.

Üblicherweise wird die Frequenz des gesendeten Radarsignals in jedem Meßzyklus so moduliert, daß zwei Frequenzrampen mit dem entgegengesetzt gleicher Steigung und eine dritte Frequenzrampe mit einer dem Betrage nach kleineren Steigung gebildet werden. Die dritte Rampe dient dann zur Beseitigung von Mehrdeutigkeiten in den Fällen, in denen mehrere Zielobjekte gleichzeitig geortet werden. Bei einem solchen System kann es beispielsweise genügen, wenn der zweite Prozessor 32 lediglich Referenzspektren für die beiden ersten Rampen berechnet.

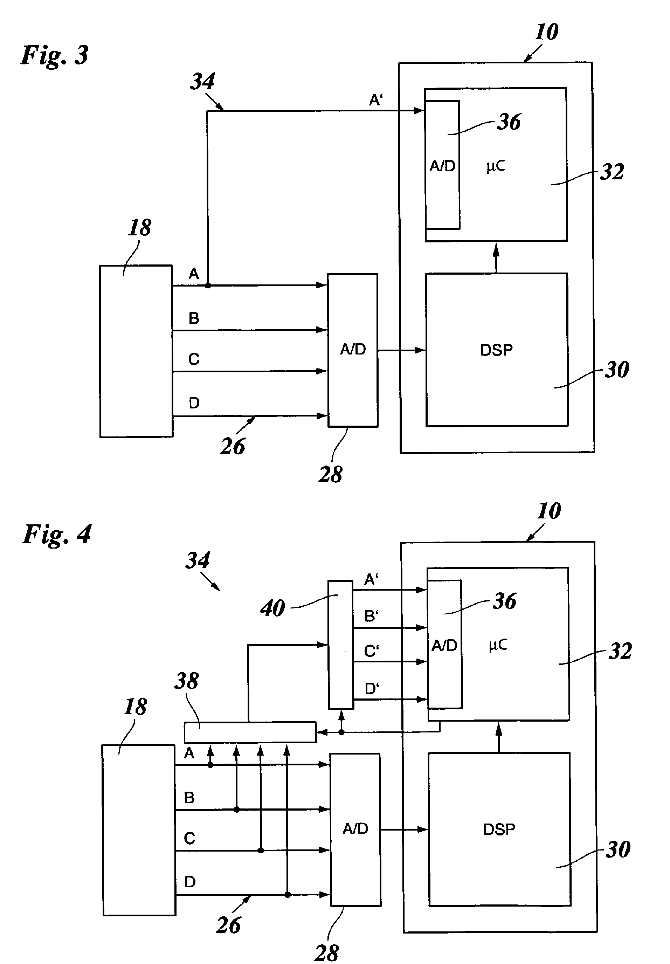

Figur 3 zeigt ein Ausführungsbeispiel, bei dem der redundante Signalpfad 34 einen einzigen Kanal A' aufweist, der von dem Kanal A des primären Signalpfades 26 abzweigt. Hier wird somit vom zweiten Prozessor 32 in jedem Meßzyklus und für jede Rampe nur ein Referenzspektrum für den Kanal A' berechnet und mit dem entsprechenden Spektrum für den Kanal A verglichen. Falls der primäre Signalpfad 26 dauerhaft gestört ist oder eine erhöhte Fehleranfälligkeit aufweist, wird mit einer entsprechenden Häufigkeit auch eine Diskrepanz zwischen dem Referenzspektrum und dem zugehörigen Spektrum im Kanal A auftreten, so daß sich das Vorliegen eines Fehlers oder einer erhöhten Fehleranfälligkeit erkennen läßt. Der Vorteil dieser Ausführungsform besteht darin, daß die zusätzliche Rechenbelastung des zweiten Prozessors 32 im Vergleich zu Figur 2 auf ein Viertel reduziert ist.

Figur 4 zeigt ein Ausführungsbeispiel, bei dem der redundante Signalpfad 34 einen Multiplexer 38 und einen Demultiplexer 40 aufweist. Im Multiplexer 38 werden die analogen Signale der Kanäle A-D vereinigt, und im Demultiplexer 40 werden sie wieder in getrennte Kanäle A'-D' aufgeteilt. Der Multiplexer und der Demultiplexer werden durch ein Signal von der Steuer- und Auswerteeinheit 10 synchronisiert. Im übrigen ist die Funktionsweise analog zu derjenigen nach Figur 2. Bei einem Zeitmultiplex sind allerdings die Samplezeiten, die für die Kanäle A'-D' zur Verfügung stehen, im Vergleich zu den Samplezeiten für die Kanäle A-D auf eine Viertel verkürzt, mit der Folge, daß die Referenzspektren nur mit einer geringeren Auflösung berechnet werden können. Im allgemeinen wird diese geringere Auflösung jedoch für einen aussagekräftigen Vergleich der Spektren genügen. Auch hier ist die Rechenbelastung des zweiten Prozessors 32 reduziert.

Es sind auch Mischformen der Ausführungsbeispiele nach Figuren 2 und 4 möglich, etwa indem jeweils nur zwei Kanäle gemultiplext werden.

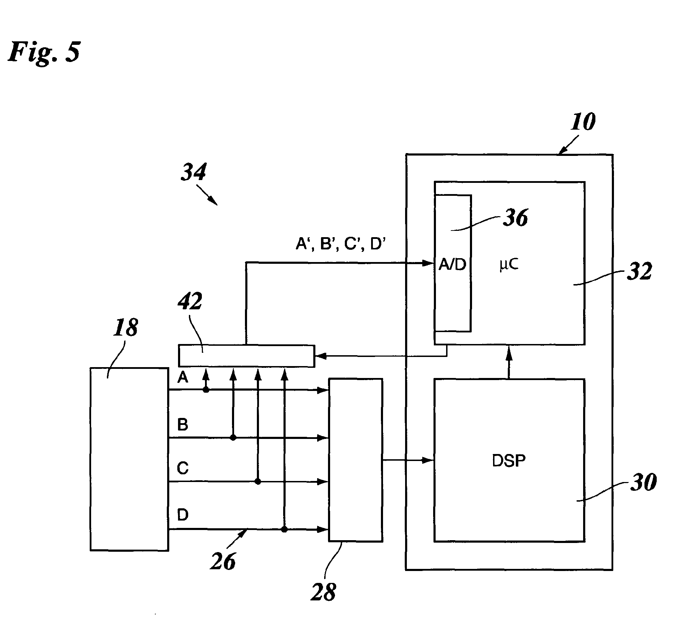

Figur 5 zeigt ein Ausführungsbeispiel, bei dem der redundante Signalpfad 34 einen Wählschalter 42 enthält, der die Kanäle A-D nacheinander auf den einzigen Eingang des Analog/DigitalWandlers 36 schaltet. So wird beispielsweise in einem Meßzyklus nur ein Referenzspektrum für den Kanal A berechnet, im nächsten Meßzyklus dann für den Kanal B und so weiter, so daß nach vier Zyklen sämtliche Kanäle überprüft sind. Ähnlich wie in Figur 3 ist auch hier die Rechenbelastung des zweiten Prozessors 32 reduziert. Der Vorteil besteht jedoch darin, daß auch Situationen erkannt werden können, in denen beispielsweise der analoge Ausgang des Vorverstärkers 18 für einen der Kanäle B-D stark verrauscht ist zu einer erhöhten Fehlerhäufigkeit führt.

Die beschriebenen Ausführungsbeispiele ermöglichen eine hohe Flexibilität und bei der Anpassung der Auslastung des zweiten Prozessors an den jeweiligen Bedarf. Wenn der zweite Prozessor stark mit anderen Aufgaben belastet ist, kann z. B. die Berechnung der Referenzspektren vorübergehend ausgesetzt werden, um zusätzliche Rechenkapazität frei zumachen. Im Fall der Figuren 2 und 4 ist es auch möglich, die Anzahl der Kanäle zu begrenzen, für die das Referenzspektrum berechnet wird.

Weiterhin kann bei den vielfältigen Funktionen, die der zweite Prozessor 32 zu erfüllen hat, eine Gewichtung nach Prioritäten vorgenommen werden. Wenn das Radarsystem beispielsweise für eine Pre-Crash-Funktion verwendet wird, so hat in einer kritischen Situation, wenn eine akute Kollisionsgefahr festgestellt wird, die Pre-Crash-Funktion eine höhere Priorität als die normale Abstandsregelung. Es ist dann möglich, die Abstandsregelung vorübergehend auszusetzen und die dadurch gewonnene Rechenkapazität für die Berechnung der Referenzspektren zu nutzen, so daß im Rahmen der Pre-Crash-Funktion eine hohe Verläßlichkeit bei der Ortung der Radarziele erreicht oder beibehalten werden kann.

Ebenso wird in einer kritischen Situation die Verfolgung des Radarziels, von dem die Kollisionsgefahr ausgeht, die höchste Priorität haben. Um die verfügbare Rechenkapazität zielgerichtet einzusetzen, kann daher in dieser Situation die Verfolgung von Radarzielen auf diejenigen Objekte beschränkt werden, von denen die Kollisionsgefahr ausgeht.

In kritischen Situationen ist es auch zweckmäßig, die Zykluszeit des Radarsystems zu verkürzen, so daß die Objekte oder zumindest das sicherheitsrelevanteste Objekt mit höherer zeitlicher Auslösung verfolgt werden kann. Dies erfordert jedoch eine erhöhte Rechenkapazität, da dann für die Auswertung der Daten nur eine geringere Zeit zur Verfügung steht. Erforderlichenfalls kann in diesem Fall die Berechnung der Referenzspektren eingeschränkt oder ausgesetzt werden, um unter Verzicht auf Redundanz eine höhere zeitliche Auflösung zu ermöglichen. Gegebenenfalls können in dieser Situation die Prozessoren 30 und 32 bei der Berechnung der Spektren auch arbeitsteilig eingesetzt werden. So könnte beispielsweise der erste Prozessor 30 die Spektren für die beiden Kanäle C und D berechnen, während parallel dazu der Prozessor 32 die Spektren für die Kanäle A' und B' berechnet, wobei diese Spektren nun aber nicht als Referenzspektren dienen, sondern unmittelbar ausgewertet werden. Auf dieses Weise wird die insgesamt für die Berechnung der Spektren benötigte Zeit halbiert.

## Patentansprüche

1. Radarsystem für Kraftfahrzeuge, mit einer Antenne (16), einem ersten Prozessor (30), der dazu ausgebildet ist von der Antenne über einen primären Signalpfad (26) zugeführte Signale in ein Spektrum zu transformieren, und einem zweiten Prozessor (32) zur weiteren Auswertung des Spektrums, **dadurch gekennzeichnet, daß** zumindest ein Teil der von der Antenne (16) empfangenen Signale über einen redundanten Signalpfad (34) unter Umgehung des ersten Prozessors (30) dem zweiten Prozessor (32) zugeführt wird und daß der zweite Prozessor seinerseits dazu ausgebildet ist, diese Signale in ein Spektrum zu transformieren, das mit dem Spektrum, das durch den ersten Prozessor (30) transformiert wurde, auf Übereinstimmung geprüft wird um Fehler in den Signalpfaden (26, 34) zu erkennen.

2. Radarsystem nach Anspruch 1, **dadurch gekennzeichnet, daß** der primäre Signalpfad (26) einen Analog/Digital-Wandler (28) enthält und daß der redundante Signalpfad (34) einen eigenen Analog/Digital-Wandler (36) aufweist.

3. Radarsystem nach Anspruch 2, **dadurch gekennzeichnet, daß** der Analog/Digital-Wandler (36) des redundanten Signalpfades (34) in den zweiten Prozessor (32) integriert ist.

4. Radarsystem nach einem der vorstehenden Ansprüche, **dadurch gekennzeichnet, daß** die Antenne (16) eine Mehrstrahlantenne ist und der primäre Signalpfad (26) mehrere parallele Kanäle (A, B, C, D) umfaßt.

5. Radarsystem nach Anspruch 4, **dadurch gekennzeichnet, daß** der redundante Signalpfad (34) mehrere parallele Kanäle (A', B', C', D') umfaßt, die jeweils von einem der Kanäle des primären Signalpfades (26) abzweigen.

6. Radarsystem nach Anspruch 5, **dadurch gekennzeichnet, daß** der redundante Signalpfad (34) einen Multiplexer (38) und einen Demultiplexer (40) enthält.

7. Radarsystem nach Anspruch 6, **dadurch gekennzeichnet, daß** der Multiplexer (38) und der Demultiplexer (40) zum Multiplexen und Demultiplexen der analogen Signale auf der Eingangsseite des Analog/Digital-Wandlers (36) angeordnet sind.

8. Radarsystem nach Anspruch 4, **dadurch gekennzeichnet, daß** die Anzahl der Kanäle (A') des redundanten Signalpfades (34) kleiner ist als die Anzahl der Kanäle (A, B, C, D) des primären Signalpfades (26).

9. Radarsystem nach Anspruch 8, **dadurch gekennzeichnet, daß** der redundante Signalpfad (34) einen Wählschalter (42) aufweist, der dazu ausgebildet ist, die Kanäle (A, B, C, D) des primären Signalpfades (26) nacheinander auf den Kanal oder die Kanäle des redundanten Signalpfades (34) zu schalten.

10. Radarsystem nach einem der vorstehenden Ansprüche, **dadurch gekennzeichnet, daß** der zweite Prozessor (32) ein Betriebsystem aufweist, das dazu ausgebildet ist, die Anteile der verfügbaren Rechenzeit, die auf die verschiedenen Auswertefunktionen und die Berechnung des Spektrums entfallen, situationsabhängig zu variieren.

## Claims

1. Radar system for motor vehicles, having an antenna (16), a first processor (30) which is designed to transform signals supplied by the antenna via a primary signal path (26) into a spectrum, and a second processor (32) for evaluating the spectrum further, **characterized in that** at least some of the signals received by the antenna (16) are supplied to the second processor (32) via a redundant signal path (34) whilst circumventing the first processor (30), and **in that** the second processor is in turn designed to transform these signals into a spectrum which is checked for a match with the spectrum transformed by the first processor (30) in order to detect errors in the signal paths (26, 34).

2. Radar system according to Claim 1, **characterized in that** the primary signal path (26) contains an analogue/digital converter (28), and **in that** the redundant signal path (34) has its own analogue/digital converter (36).

3. Radar system according to Claim 2, **characterized in that** the analogue/digital converter (36) in the redundant signal path (34) is integrated in the second processor (32).

4. Radar system according to one of the preceding claims, **characterized in that** the antenna (16) is a multibeam antenna, and the primary signal path (26) comprises a plurality of parallel channels (A, B, C, D).

5. Radar system according to Claim 4, **characterized in that** the redundant signal path (34) comprises a plurality of parallel channels (A', B', C', D') which each branch off from one of the channels in the primary signal path (26).

6. Radar system according to Claim 5, **characterized in that** the redundant signal path (34) contains a multiplexer (38) and a demultiplexer (40).

7. Radar system according to Claim 6, **characterized in that** the multiplexer (38) and the demultiplexer (40) for multiplexing and demultiplexing the analogue signals are arranged on the input side of the analogue/digital converter (36).

8. Radar system according to Claim 4, **characterized in that** the number of channels (A') in the redundant signal path (34) is smaller than the number of channels (A, B, C, D) in the primary signal path (26).

9. Radar system according to Claim 8, **characterized in that** the redundant signal path (34) has a selector switch (42) which is designed to switch the channels (A, B, C, D) in the primary signal path (26) in succession to the channel or channels in the redundant signal path (34).

10. Radar system according to one of the preceding claims, **characterized in that** the second processor (32) has an operating system which is designed to vary the proportions of available computation time, which are allotted to the different evaluation functions and to the calculation of the spectrum, on the basis of the situation.

## Revendications

1. Système radar pour véhicules automobiles, doté d'une antenne (16), d'un premier processeur (30) configuré pour transformer en un spectre des signaux apportés par l'antenne sur un parcours primaire de signaux (26) et d'un deuxième processeur (32) qui poursuit l'évaluation du spectre,
**caractérisé en ce que**
au moins une partie des signaux reçus par l'antenne (16) est apportée au deuxième processeur (32) par un parcours redondant de signaux (34) qui contourne le premier processeur (30) et
**en ce que** le deuxième processeur est lui-même configuré pour transformer ces signaux en un spectre dont la correspondance avec le spectre qui a été transformé par le premier processeur (30) est vérifiée pour détecter des défauts dans les parcours de signaux (26, 34).

2. Système radar selon la revendication 1, **caractérisé en ce que** le parcours primaire de signaux (26) contient un convertisseur analogique/numérique (28) et **en ce que** le parcours redondant de signaux (34) présente son propre convertisseur analogique/numérique (36).

3. Système radar selon la revendication 2, **caractérisé en ce que** le convertisseur analogique/numérique (36) du parcours redondant de signaux (34) est intégré dans le deuxième processeur (32).

4. Système radar selon l'une des revendications précédentes, **caractérisé en ce que** l'antenne (16) est une antenne multifaisceaux et **en ce que** le parcours primaire de signaux (26) comporte plusieurs canaux parallèles (A, B, C, D).

5. Système radar selon la revendication 4, **caractérisé en ce que** le parcours redondant de signaux (34) comporte plusieurs canaux parallèles (A', B', C', D') qui dérivent d'un canal respectif du parcours primaire de signaux (26).

6. Système radar selon la revendication 5, **caractérisé en ce que** le parcours redondant de signaux (34) contient un multiplexeur (38) et un démultiplexeur (40).

7. Système radar selon la revendication 6, **caractérisé en ce que** le multiplexeur (38) et le démultiplexeur (40) qui multiplexent et démultiplexent les signaux analogiques sont disposés sur le côté d'entrée du convertisseur analogique/numérique (36).

8. Système radar selon la revendication 4, **caractérisé en ce que** le nombre des canaux (A') du parcours redondant de signaux (34) est plus petit que le nombre des canaux (A, B, C, D) du parcours primaire de signaux (26).

9. Système radar selon la revendication 8, **caractérisé en ce que** le parcours redondant de signaux (34) présente un commutateur de sélection (42) configuré pour raccorder les canaux (A, B, C, D) du parcours primaire de signaux (26) les uns après les autres sur le ou les canaux du parcours redondant de signaux (34).

10. Système radar selon l'une des revendications précédentes, **caractérisé en ce que** le deuxième processeur (32) présente un système d'exploitation configuré pour faire varier en fonction de la situation les portions de temps de calcul disponible consacrées aux différentes fonctions d'évaluation et au calcul du spectre.
